# EUROPEAN PATENT SPECIFICATION

(11) **EP 1 678 432 B1**
(45) Date of publication and mention of the grant of the patent: **07.08.2013**
(21) Application number: 04789797.0
(22) Date of filing: 28.10.2004
(51) Int. Cl.: F16J 15/02, F16K 27/06, F16K 5/08

(54) **ADJUSTABLE SEALING MEANS**
EINSTELLBARE DICHTUNGSMITTEL
ORGANE D'ETANCHEITE REGLABLE

(30) Priority: 31.10.2003 CA 2447866; 28.10.2004 CA 2486008
(43) Date of publication of application: 12.07.2006
(73) Proprietor: Fluoroseal Inc, Montreal Quebec H4T 1X4 (CA)
(72) Inventor: PAUL, Nicolas, Varennes, Quebec J3X 1V1 (CA)
(74) Representative: Vuillermoz, Bruno
(86) International application number: PCT/CA2004/001890
(87) International publication number: WO 2005/043014

(56) References cited:
- JP-A- 04 191 581
- JP-A- 07 167 340
- US-A- 739 346
- US-A- 824 527
- US-A- 3 185 487
- US-A- 4 475 713

## Description

### BACKGROUND

It is common and usual practice in sealing the top portion of rotary valves to use a top seal that seals against media leakage while simultaneously accommodating rotational movement of the valving element relative to a valve body. The valving element of a rotary valve has a closure portion which is rotatably fitted within a valve body. This closure portion of the valve is joined by a stem or shaft portion which extends out of the valve body to interact with an actuator and transmit torque to the closure portion. This torque is used to rotate the closure portion within the valve body and to open or close a passageway in the valve.

In plug valves, it is common practice to seal the top of the valve with a centrally apertured diaphragm with the shaft portion of the valve extending through the central aperture of the top seal. The mechanism for the adjustment of plug valves normally turns around the compression of two sealing parts to prevent leakage. These mechanisms involve normally a plurality of tightening bolts or screws (usually three but sometimes two).

Examples of such valves can be seen in U. S. Patents 3,235,272 (Smith); 4,159,818 and the generic 4.475,713 (Reed et al.).

While all of the above mentioned sealing arrangements have been highly satisfactory, they are not without their attendant disadvantages. For example, the tightening bolts or screws often need to be screwed simultaneously to prevent unwanted side loading on the system. Furthermore, these bolts or screws can be difficult to access with tools, especially in case of toxic leakage. As a result, these screws are rarely adjusted which reduces the effective life of the valve.

It is thus an object of the present invention to provide an adjustable stem sealing means which uses a single screw that is positioned on the front of the cover for easy access, and eliminating any interference with future automation devices to be installed on the valve.

It is a further object of the present invention to provide a top valve adjustable seal which provides for ease of adjustment when the valve is serviced in the field and which does not require special tools.

It is yet another object of the present invention to provide plug valve adjustment means which comprises a cam.

### SUMMARY OF THE INVENTION

Our mechanism uses only one adjustment screw that is positioned on the front of the cover for easy access. The force generated by the screw is transposed into a vertical force and a horizontal force by a cam. The multiple faces of the cam are used to transmit the force vertically and horizontally and will maintain the mechanism in a straight position.

Preferably, the top of the cam is used to indicate its position. As the cam is rotated, an arrow will point its position relative to the graduation on the cover. Also as the cam is rotated it's vertical motion downward can be used as an indication of the adjustment measured by the part of the cam that is outside the cover, it indicates the amount of compression that is left before the maximum compression is reached (when the top face of the cam mates the top of the cover).

The base of the cam can be shaped to fit any type of seal or purpose; for example an o-ring or a p-seal. The angle of the compression plate or the like can be varied as needed to redistribute the compression in radial and axial direction on the seal.

### BRIEF DESCRIPTION OF THE DRAWINGS

Other objects and advantages of the invention will become apparent when reading the following detailed description and upon reference to the drawings, in which:
Figure 1 is a perspective view of a plug valve made in accordance with the present invention.
Figure 2 is a fragmentary perspective of the plug valve shown in figure 1.

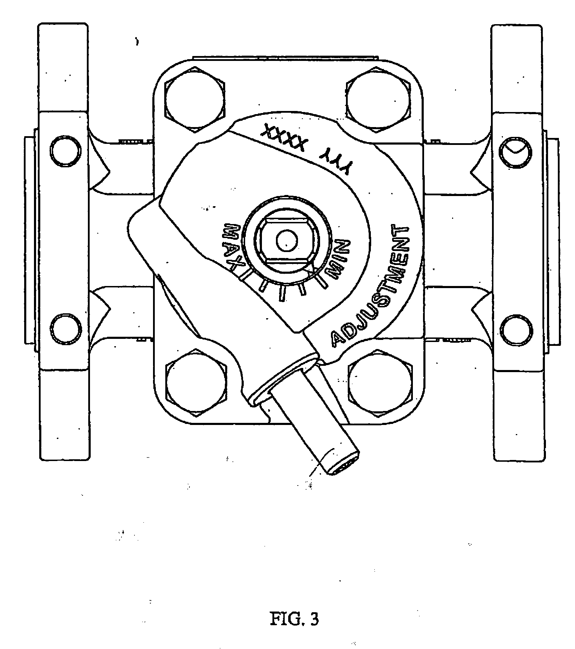

Figure 3 is a top view of the plug valve shown in figure 1.

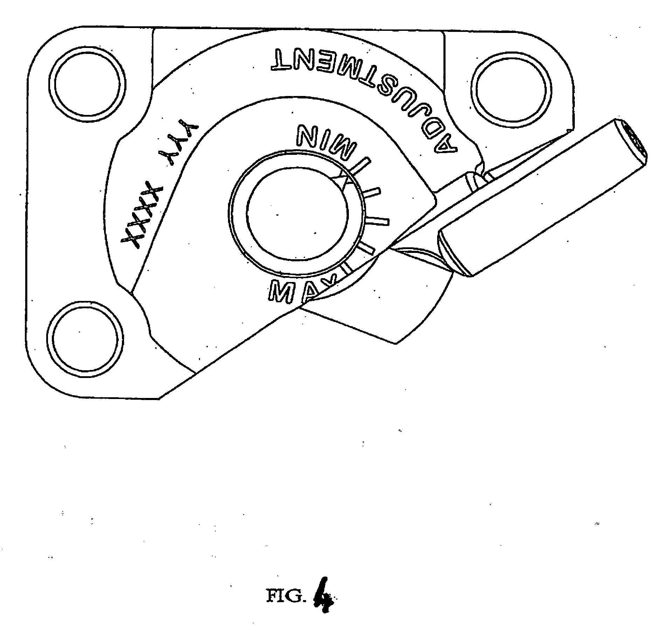

Figure 4 is a partial top view of the plug valve shown in figure 1.

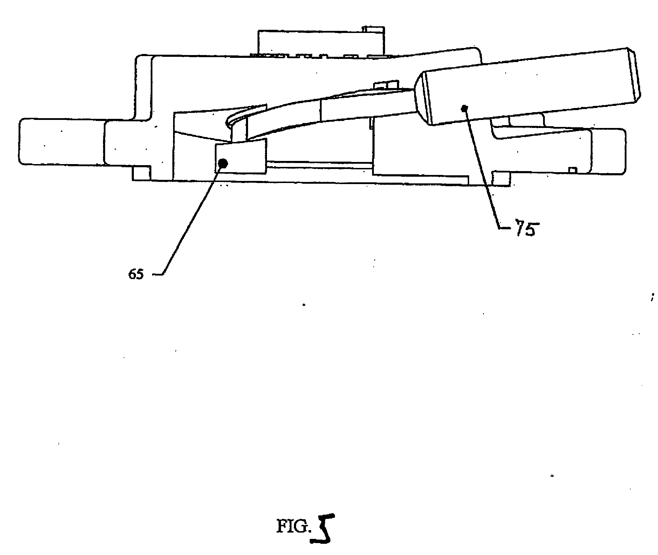

Figure 5 is a cross sectional view of the plug valve shown in figure 4.

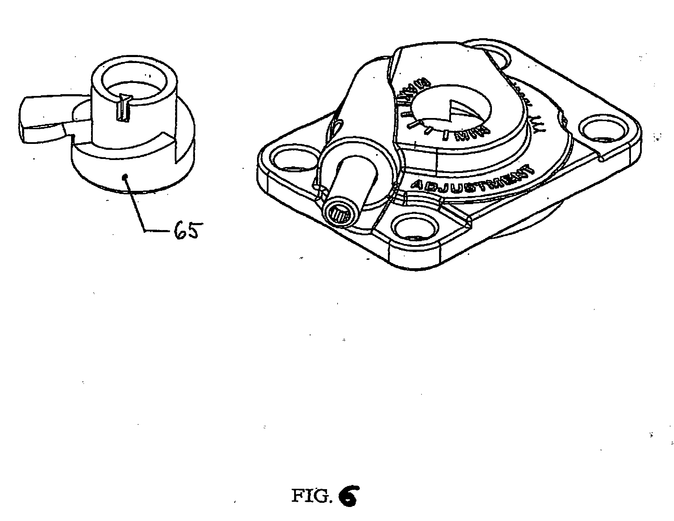

Figure 6 is a perspective view of the cover and of the adjustment cam (unassembled) of the plug valve shown in figure 1.

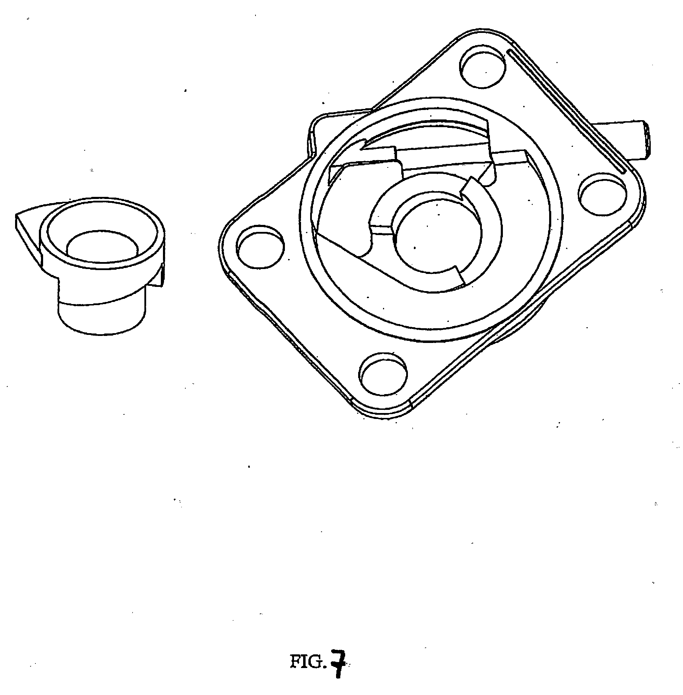

Figure 7 is a bottom view of the cover and of the adjustment cam shown in figure 6.

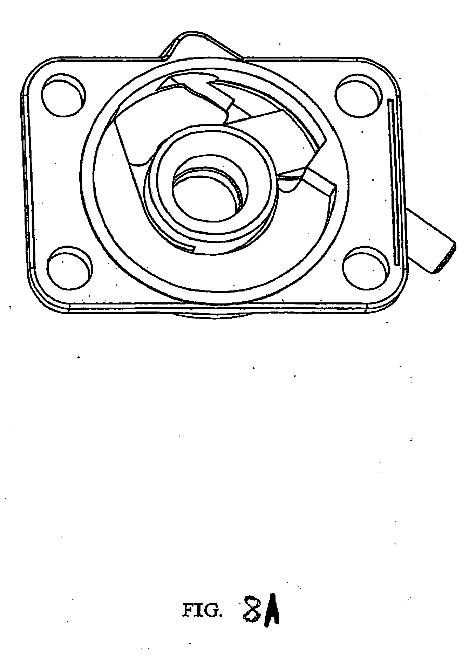

Figure 8A is a bottom perspective view of the cover and of the adjustment cam shown in figure 6 (assembled and in a first position).

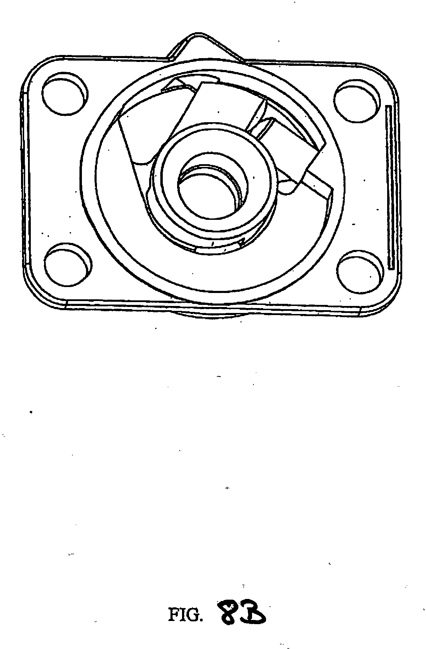

Figure 8B is a bottom perspective view of the cover and of the adjustment cam shown in figure 6 (assembled and in a second position).

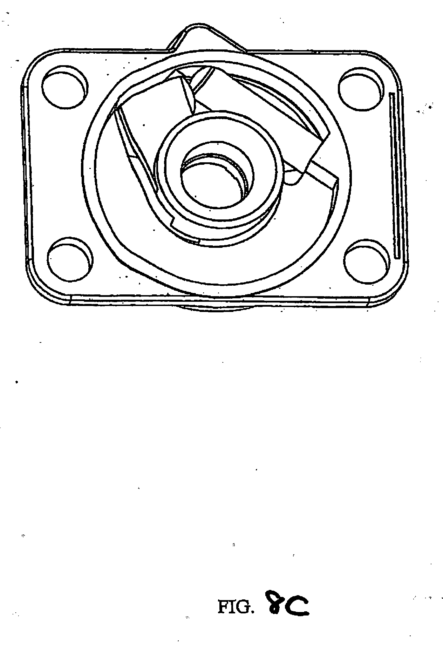

Figure 8C is a bottom perspective view of the cover and of the adjustment cam shown in figure 6 (assembled and in a third position).

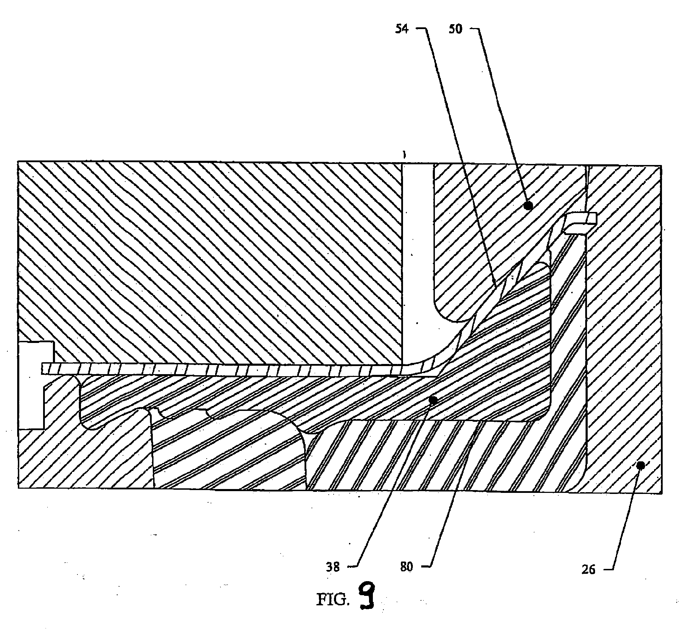

Figure 9 is a fragmentary cross sectional view of a the cover and top seal of the plug valve shown in figure 1.
Figure 10 is an exploded perspective view of an adjustable sealing device in accordance with this invention.
Figure 11 is a top view of the adjustable sealing device shown in figure 10 in its minimum (A), intermediary (B) and maximum (C) compression positions.
Figure 12 is a cross-sectional view of the adjustable sealing device shown in figure 11 in its minimum (A), intermediary (B) and maximum (C) compression positions.
Figure 13 is a partial perspective sectional view of the adjustable sealing device shown in figure 11 in its minimum (A), intermediary (B) and maximum (C) compression positions.
Figure 14 is a top view of the adjustment cam/screw shown in figure 10 in their minimum (A), intermediary (B) and maximum (C) compression positions.

While the invention will be described in connection with a preferred embodiment, it will be understood that it is not intended to limit the invention to that embodiment. On the contrary, it is intended to cover all alternatives, modifications and equivalents as may be included within the spirit and scope of the invention as defined by the appended claims. More particularly, the invention, although mostly described in relation to plug valves, is not limited thereto. It is applicable to any valve or any other device having a stem or shaft extending from a body that requires an adjustable seal.

### DETAILED DESCRIPTION OF THE PREFERRED EMBODIMENT

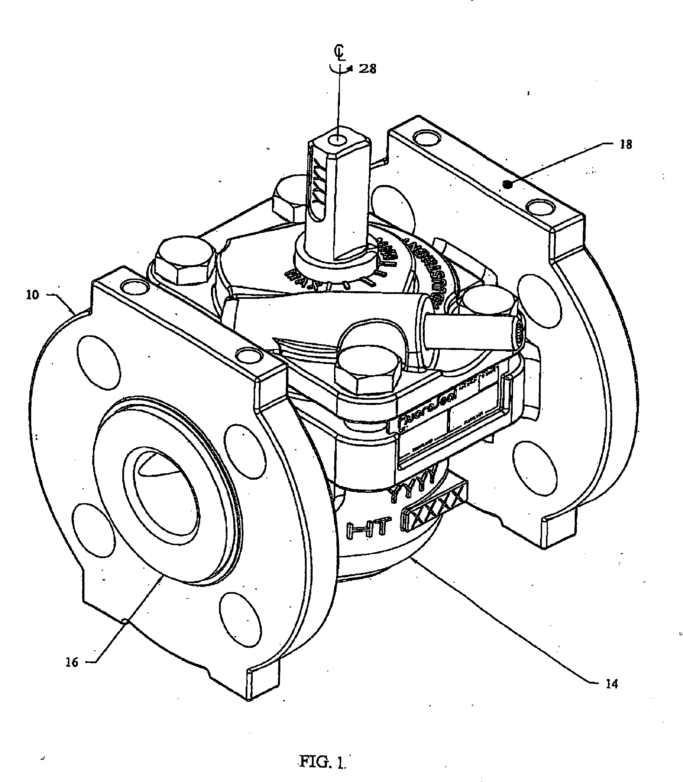

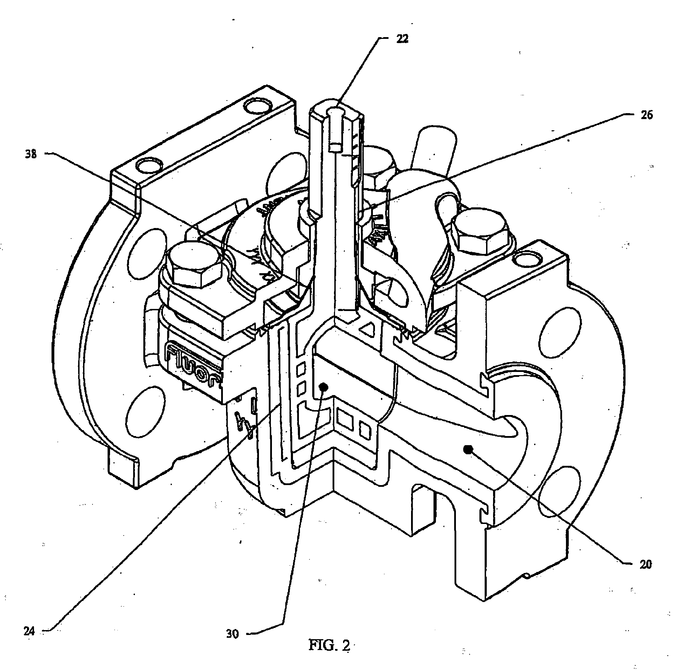

Referring now to the drawings and to FIG. 1 in particular, a plug valve 10 constructed in accordance with the present invention is shown. The plug valve 10 includes a valve body 14 having an inlet 16 and an outlet 18 with an internal flow passage 20 extending therebetween. A rotatable valving member 22 extends across the internal flow passage 20 to selectively block fluid flow therethrough. This valving member 22 is rotatably disposed within the valve body 14 of the illustrated embodiment and has a plug portion 24 which extends across the flow passage 20. A stem portion 26 of the rotatable valving member 22 is attached to the plug portion 24 to extend out of the valve body 14. Under normal circumstances, the stem portion 26 is interconnected with an actuator (not shown, either manual or automatic) which transmits a torque to the valving member 22 to effectuate relative rotation of the valving member 22 relative to the valve body 14 along a rotational axis 28. The plug portion 24 of the valving member 22 has a through opening or passageway 30 therein, as is usual, to be placed in and out of registry with the internal flow passage 20 incident to partial rotation of the valving member 22 about the axis 28. In the illustration of FIG. 2B, the valving member 22 is shown in an open position. In this open position, the passageway 30 through the plug portion 24 registers with the internal flow passage 20. As should be readily apparent, the valving member 22 is designed to be rotated about this axis 28 to place its through passageway 30 out of registry with the valve housing's (14) internal flow passage 20 and to completely cut off flow through that internal flow passage 20.

A first or primary sealing member in the form of a sleeve or liner formed of a fluorinated hydrocarbon polymeric material such as polytetrafluoroethylene, sold under the trademark TEFLON, or equivalent material is preferably fitted about the periphery of the plug portion 24 of the valving member 22 and is aperatured in correspondency to that plug portion 24 to permit registry of the plug portions (24) through passageway 30 with the internal flow passage 20 whenever valving member 22 is in the open position illustrated in FIG. 2. The sealing member is snugly fitted on opposite sides of the internal flow passage 20 and provides a seal between the plug portion 24 of the valving member 22 and the valve body 14.

As mentioned above, the stem or shaft portion 26 of the valving member 22 extends out of the body 14. In the illustration of FIG. 2, this extension is through an opening in the top of the valve body 14, and for purposes of the present description, this opening will be referred to as a top opening (although the valve could clearly be oriented differently). This top opening is covered with a top seal in a form of a diaphragm 38 which is aperatured to accommodate the stem portion of the valving member 22 which passes through the top seal/diaphragm 38. The top seal/diaphragm 38 will initially be described as having been formed of a fluorinated hydrocarbon polymer such as polytetrafluoroethylene or equivalent material. However, as will be highlighted below, the design of the top seal 38 is such to permit the use of a wide range of shapes and materials to meet a correspondingly wide range of applications.

The top seal 38 and the cooperating components of the valve 10 with which it interacts allow movement between the valve body 14 and the plug 22 to occur without interrupting the sealing function provided by the top seal 38. Plug portion 22 has a taper from the top of the plug (proximal to stem 26) to the lower portion of the plug (distal to the stem 26). This taper of the plug 26 allows for downward adjustability of the plug by increasing the pressure of tightening bolt 75 which in turn will apply pressure to the cam 65. Downward adjustment of plug 22 relative to the body 14 increases the service pressure of the valve 10, permitting use of higher pressurized content without leakage. Increasing the surface pressure of the valve also increases the torque required to rotate the plug 22 relative to the body 14.

Tightening of the seal tightening cam 65 applies a downward force on the thrust collar 50. This downward force is principally applied to the obliquely oriented bearing surface 54 which, in turn, applies a force to the rotatable valving member 22 in a direction substantially perpendicular to that of the bearing surface 54. The result in the force applied to the rotating valving member 22 has two components, a first downward component in the direction of arrow 70 and a second horizontal component in the direction of arrow 72. The two resulting components of force urge the top seal 38 in sealing engagement with both the stem portion 26 and the shoulder 80 of the rotatable valving member.

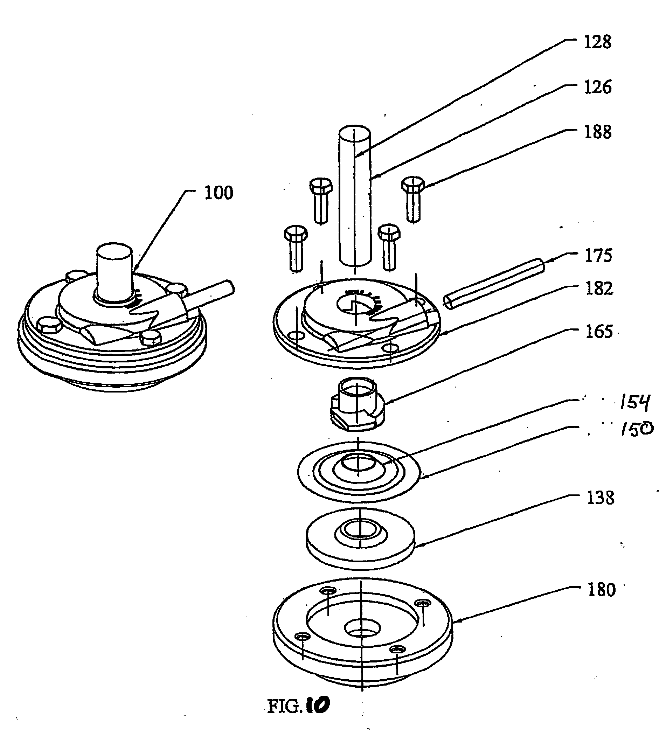

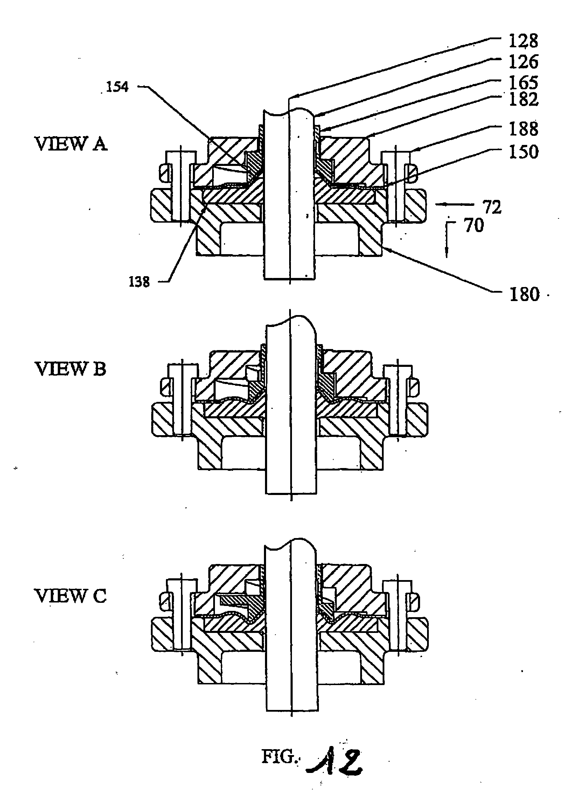

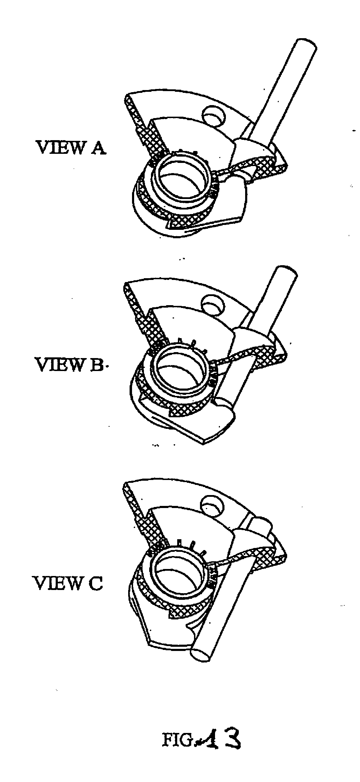

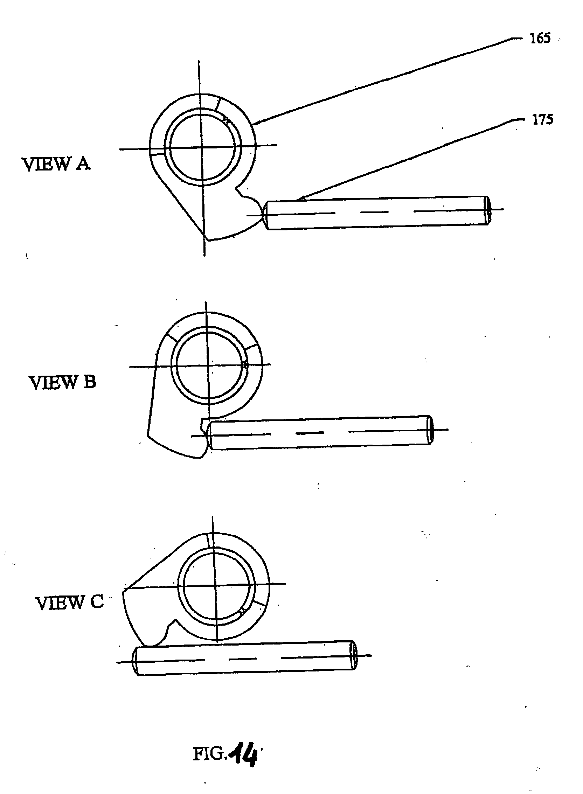

Figures 10-14 show another embodiment of the invention. In this embodiment, a stem sealing device 100 comprises a base 180, a seal 138, a thrust collar 150, a cam 165, a cover 182 and a bolt or screw 175.

The base 180 may be replaced by a similarly configured portion of the body of the object to be sealed. Bolts 188 are used to securely press the cover 182, the cam 165, the thrust collar 150 and the seal 138 to the base 180 and/or body.

The stem 126 is introduced in the central opening in the stem sealing device 100. Then the bolt/screw 175 is tightened as needed.

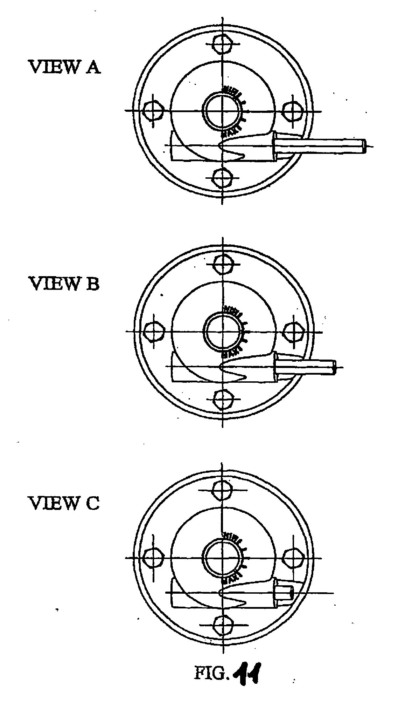

Figures 11-14 show the stem sealing device 100 in its minimum (A), intermediary (B) and maximum (C) compression positions.

Thus, it is apparent that there has been provided, in accordance with the invention, a top seal that fully satisfies the objects, aims and advantages set forth above. While the invention has been described in conjunction with a specific embodiment thereof, it is evident that many alternatives, modifications, and variations will be apparent to those skilled in the art in light of the foregoing description.

## Claims

1. An adjustable stem sealing means to be installed on a valve, the valve comprising:
- a valve body (14) comprising an inlet (16) and an outlet (18) with an internal flow passage (20),
- a rotatable valving member (22) extending across the internal flow passage (20), and rotatably disposed within the valve body (14), the valving member (22) comprising a plug portion (24) which extends across the flow passage (20), and a stem portion (26) which extends from the plug portion (24) and out of the valve body (14) through an opening in the top of the valve body (14), wherein said adjustable stem sealing means comprising:
- a cover (182) adapted to be mounted to said valve body (14);
- a seal (38, 138) adapted to cover the opening and apertured to accommodate the stem portion (26, 126) of the valving member (22) which passes through the seal (38, 138);
- a thrust collar (50, 150) adapted to urge the seal (38, 138) in sealing engagement with both the stem portion (26, 126) and the rotatable valving member (22) when a downward force is applied thereon;
- a rotatable cam (65, 165) **characterized in that** is configured to apply the downward force on the thrust collar (50, 150) when a pressure is applied thereto;
- a screw or a bolt (75, 175) is configured to apply the pressure to the cam (65, 165).

2. An adjustable stem sealing mean as claimed in claim 1, wherein a top portion of the cam is used as a cam position indicator.

3. An adjustable stem sealing mean as claimed in claim 1, wherein the seal (38, 138) is in the form of a diaphragm formed of a fluorinated hydrocarbon polymer.

4. An adjustable stem sealing mean as claimed in claim 1, wherein the plug portion (24) has a taper from the top to the plug to the lower portion of the plug to allow for downward adjustability of the plug (24) by increasing the pressure of tightening bolt or screw (75) which in turn apply pressure to the cam (65).

5. An adjustable stem sealing mean as claimed in claim 1, wherein the thrust collar has an obliquely oriented bearing surface (54).

6. A plug valve assembly comprising an adjustable stem sealing means as claimed in claim 1 to 5.

7. A rotary valve assembly comprising an adjustable stem sealing means as claimed in claim 1 to 5.

## Patentansprüche

1. Einstellbare Schaftabdichteinrichtung, die an einem Schieber (Absperrorgan) anzubringen ist, wobei der Schieber aufweist:
- ein Schiebergehäuse (14), das einen Einlass (16) und einen Auslass (18) mit einem inneren Durchflusskanal (20) umfasst,
- ein drehbares Regulierelement (22), das sich quer durch den inneren Durchflusskanal (20) erstreckt und innerhalb des Schiebergehäuses (14) drehbar angeordnet ist, wobei das Regulierelement (22) einen Kükenteil (24), der sich quer durch den Durchflusskanal (20) erstreckt, und einen Schaftteil (26), der sich von dem Kükenteil (24) und aus dem Schiebergehäuse (14) heraus durch eine Öffnung an dem oberen Ende des Schiebergehäuses (14) erstreckt, aufweist, wobei die einstellbare Schaftabdichteinrichtung umfasst:
- eine Abdeckplatte (182), die an dem Schiebergehäuse (14) befestigt werden soll;
- eine Dichtung (38, 138), die die Öffnung bedecken soll und mit einem Loch versehen ist, um den Schaftteil (26, 126) des Regulierelements (22), der durch die Dichtung (38, 138) hindurchgeht, aufzunehmen;
- einen Druckring (50, 150), der, wenn darauf eine nach unten gerichtete Kraft aufgebracht wird, die Dichtung (38, 138) in eine abdichtende Anlage sowohl mit dem Schaftteil (26, 126) als auch dem drehbaren Regulierelement (22) drücken soll;
**dadurch gekennzeichnet, dass**
- eine drehbare Kurvenscheibe (65, 165) so gestaltet ist, um die nach unten gerichtete Kraft auf den Druckring (50, 150) aufzubringen, wenn ein Druck darauf aufgebracht wird;
- eine Spindel oder eine Schraube (75, 175) so gestaltet ist, um den Druck auf die Kurvenscheibe (65, 165) aufzubringen.

2. Einstellbare Schaftabdichteinrichtung nach Anspruch 1, bei der ein oberer Teil der Kurvenscheibe als ein Kurvenscheibenpositionsanzeiger verwendet wird.

3. Einstellbare Schaftabdichteinrichtung nach Anspruch 1, bei der die Dichtung (38, 138) in der Form einer aus einem fluorierten Kohlenwasserstoffpolymer gebildeten Membran ist.

4. Einstellbare Schaftabdichteinrichtung nach Anspruch 1, bei welcher der Kükenteil (24) eine Verjüngung von dem Oberteil des Kükens zu dem unteren Teil des Kükens aufweist, um eine Verstellbarkeit des Kükens (24) nach unten zuzulassen, indem der Druck zum Anziehen der Schraube oder Spindel (75) erhöht wird, die wiederum Druck auf die Kurvenscheibe (65) aufbringen.

5. Einstellbare Schaftabdichteinrichtung nach Anspruch 1, bei welcher der Druckring eine schräg ausgerichtete Auflagefläche (54) besitzt.

6. Kegelschieberaufbau, umfassend eine einstellbare Schaftabdichteinrichtung nach Anspruch 1 bis 5.

7. Drehschieberaufbau, umfassend eine einstellbare Schaftabdichteinrichtung nach Anspruch 1 bis 5.

## Revendications

1. Moyens ajustables d'étanchéité de tige destinés à être installés sur une soupape, la soupape comprenant :
- un corps de soupape (14) comprenant une entrée (16) et une sortie (18), ayant un passage d'écoulement interne (20),
- un élément d'obturation rotatif (22) s'étendant à travers le passage d'écoulement interne (20), et disposé de manière rotative dans le corps de soupape (14), l'élément d'obturation (22) comprenant une partie d'obturateur (24) qui s'étend à travers le passage d'écoulement (20), et une partie de tige (26) qui s'étend à partir de la partie d'obturateur (24) et à l'extérieur du corps de soupape (14) à travers une ouverture située dans la partie supérieure du corps de soupape (14), les moyens d'étanchéité de tige ajustables comprenant :
- un couvercle (182) adapté pour être monté sur le corps de soupape (14) ;
- un joint (38, 138) adapté pour recouvrir l'ouverture et muni d'une ouverture pour recevoir la partie de tige (26, 126) de l'élément d'obturation (22) qui passe à travers le joint (38, 138) ;
- un collier de serrage (50, 150) adapté pour repousser le joint (38, 138) en contact étanche avec à la fois la partie de tige (26, 126) et l'élément d'obturation rotatif (22) lorsqu'une force vers le bas est appliquée sur celui-ci ;
**caractérisés en ce que**
- une came rotative (65, 165) est configurée pour appliquer la force vers le bas sur le collier de serrage (50, 150) lorsqu'une pression est appliquée sur celle-ci ;
- une vis ou un boulon (75, 175) est configuré(e) pour appliquer la pression sur la came (65, 165).

2. Moyens ajustables d'étanchéité de tige selon la revendication 1, dans lesquels une partie supérieure de la came est utilisée comme indicateur de la position de la came.

3. Moyens ajustables d'étanchéité de tige selon la revendication 1, dans lesquels le joint (38, 138) a la forme d'une membrane formée d'un polymère d'hydrocarbure fluoré.

4. Moyens ajustables d'étanchéité de tige selon la revendication 1, dans lesquels la partie d'obturateur (24) a un biseau allant de la partie supérieure de l'obturateur vers la partie inférieure de l'obturateur pour permettre une capacité d'ajustage vers le bas de l'obturateur (24) en augmentant la pression du boulon ou de la vis de serrage (75) qui à son tour applique une pression sur la came (65).

5. Moyens ajustables d'étanchéité de tige selon la revendication 1, dans lequel le collier de serrage a une surface d'appui orientée en oblique (54).

6. Ensemble de soupape à obturateur comprenant des moyens ajustables d'étanchéité de tige selon l'une quelconque des revendications 1 à 5.

7. Ensemble de soupape rotative comprenant des moyens ajustables d'étanchéité de tige selon l'une quelconque des revendications 1 à 5.
